# EUROPÄISCHE PATENTANMELDUNG

(11) **EP 1 044 877 A2**
(43) Veröffentlichungstag der Anmeldung: **18.10.2000**
(21) Anmeldenummer: 00107574.6
(22) Anmeldetag: 07.04.2000
(51) Int. Cl.: B64D 11/06

(54) **Fluggastsitz**

(30) Priorität: 13.04.1999 DE 19916593
(71) Anmelder: AIDA Development GmbH, 74523 Schwäbisch-Hall (DE)
(72) Erfinder: Schoenenberg, Frank-Heinrich, 74523 Schwäbisch Hall (DE); König, Thomas, 92637 Weiden (DE)
(74) Vertreter: Preissner, Nicolaus, Dipl.-Ing.

(57) **Zusammenfassung**

Die Erfindung betrifft einen Fluggastsitz (10) mit einem Traggestell (14), das eine Schwenkachse (17) aufweist, an der ein Sitzteil (11), bestehend aus einer Sitzfläche (12) und einer Rückenlehne (13), schwenkbar angeordnet ist. Um eine einfache Verstellbarkeit des Sitzteiles bei geringen Bewegungen im Bereich der Vorderkante (19) zu gewährleisten, ist die Schwenkachse (17) in einem mittleren Bereich der Sitzfläche (12) angeordnet und weiterhin in einem vorderen Bereich (12a) der Sitzfläche ein Mittel vorgesehen, das den Oberschenkeldruck im vorderen Bereich der Sitzfläche (12) bei der Absenkung des Sitzteiles (11) verringert. Dies kann beispielsweise durch eine nach vorne abfallende Außenkontur (22) der Sitzfläche (12) im vorderen Bereich (12a) erzielt werden.

## Beschreibung

Die Erfindung betrifft einen Fluggastsitz mit einem Traggestell, das eine Schwenkachse aufweist, an der ein Sitzteil, bestehend aus einer Sitzfläche und einer Rückenlehne, schwenkbar angeordnet ist.

Ein derartiger Fluggastsitz ist aus der DE 42 22 222 C2 bekannt. Bei dem bekannten Fluggastsitz ist das Sitzteil als Sitzschale aus Kunststoff ausgebildet. Im Bereich der Vorderkante ist das Sitzteil an einer ortsfest am Traggestell angeordneten Schwenkachse gelagert. Am hinteren Ende der Sitzfläche ist ein Verstellelement vorgesehen, das mit einer Verstellvorrichtung des Traggestells zusammenwirkt. Hierdurch können unterschiedliche Schwenkstellungen des Sitzteiles bezüglich des Traggestelle eingestellt werden. Da das Sitzteil im Bereich seiner Vorderkante gelagert ist, behält die Vorderkante der Sitzfläche bei jeder Schwenkstellung ihre Höhe bei. Beeinträchtigungen des Sitzkomforts durch erhöhte Oberschenkelbeanspruchungen treten hierdurch nicht auf. Nachteilig ist bei dem bekannten Sitz jedoch, daß der Passagier die Aufwärtsbewegung des Sitzteiles aus seiner tiefsten Position nicht unterstützen kann. Hierdurch ist eine relativ aufwendige Hebeeinrichtung erforderlich.

Ausgehend hiervon liegt der Erfindung die Aufgabe zugrunde, einen Fluggastsitz der eingangs genannten Art vorzuschlagen, bei dem eine Aufwärtsbewegung des Sitzes durch den Passagier unterstützt wird und der auf den Oberschenkel des Passagiers ausgeübte Druck gering gehalten wird.

Zur Lösung dieser Aufgabe wird bei einem Fluggastsitz der eingangs genannten Art vorgeschlagen, daß die Schwenkachse in einem mittleren Bereich der Sitzfläche angeordnet ist und daß in einem vorderen Bereich der Sitzfläche ein Mittel vorgesehen ist, das den Oberschenkeldruck im vorderen Bereich der Sitzfläche bei der Absenkung des Sitzteiles verringert.

Da bei dem erfindungsgemäßen Fluggastsitz die Schwenkachse in einem mittleren Bereich angeordnet ist, wird die Aufwärtsbewegung des Sitzteiles aus seiner tiefsten Position durch den Passagier unterstützt. Hierbei wirkt der vordere Bereich des Sitzes als Hebel, der die Aufwärtsbewegung unterstützt. Obwohl im vorderen Bereich der Sitzfläche keine stationären Verhältnisse vorliegen, werden der Oberschenkeldruck durch die vorgesehenen Mittel gering gehalten, sodaß keine Beeinträchtigungen des Sitzkomforts auftreten. Der erfindungsgemäße Fluggastsitz weist insgesamt einen einfachen und somit kostengünstigen Aufbau auf.

Vorteilhafte Ausgestaltungen der Erfindung ergeben sich aus den Unteransprüchen.

Vorteilhaft ist die Schwenkachse in der Nähe des Sitzpunktes des Passagiers, vorzugsweise hinter dem Sitzpunkt des Passagiers, angeordnet. Hierdurch ist gewährleistet, daß der vordere Bereich der Sitzfläche als Hebel wirkt, der die Aufwärtsbewegung des Sitzteiles aus seiner tiefsten Position unterstützt.

Hierbei kann die Schwenkachse in einem Bereich von 0,30 bis 0,70 der Tiefe der Sitzfläche angeordnet sein.

In vorteilhafter Ausgestaltung weist der Sitz eine Schaumstoffauflage, insbesondere aus PU-Weichschaumstoff, auf. Zweckmäßig ist die Schaumstoffauflage lösbar und somit austauschbar an dem Sitzteil festgelegt.

Um die Anhebung des vorderen Bereiches der Sitzfläche bei der Absenkung des Sitzteiles zu verringern, kann der Sitz und/oder die Schaumstoffauflage im vorderen Bereich eine schräg nach vorne abfallende Aussenkontur aufweisen. Hierdurch tritt bei der Absenkung des Sitzteiles nur eine sehr geringe Anhebung im vorderen Bereich der Sitzfläche auf.

Bei einer vorteilhaften Weiterbildung weist der Sitz und/oder die Schaumstoffauflage eine ausgehend von der Schwenkachse zunächst ansteigende und anschließend schräg nach vorne abfallende Außenkontur auf.

Nach einer anderen vorteilhaften Ausgestaltung kann die Schaumstoffauflage im vorderen Bereich der Sitzfläche eine geringere Shore-Härte als im hinteren Teil der Sitzfläche aufweisen.

Hierbei kann beispielsweise im vorderen Bereich ein Schaumstoffmaterial mit geringerer Shore-Härte vorgesehen sein.

Bei einer alternativen Ausgestaltung weist die Schaumstoffauflage im vorderen Bereich die Shore-Härte verringernde Einschnitte auf. Dies kann beispielsweise durch eine Vielzahl von in Querrichtung verlaufender Einschnitte erzielt werden.

Bei einer anderen vorteilhaften Ausgestaltung weist die Sitzfläche ein Vorderteil auf, das über ein Gelenk an dem hinteren Teil der Sitzfläche angeordnet ist und an einer Kulissenführung zugeführt ist.

Bei einer weiteren vorteilhaften Ausgestaltung ist im vorderen Bereich der Sitzfläche ein Polsterelement vorgesehen, dessen Volumen veränderbar ist. Hierbei kann der Passagier das Volumen des Polsterelements selbsttätig einstellen.

Vorteilhaft weist das Sitzteil eine Verstelleinrichtung zur Veränderung der Sitzposition auf.

Hierbei kann die Verstelleinrichtung mindestens eine Hebeeinrichtung aufweisen, die einerseits am Traggestell und andererseits am Sitzteil, insbesondere im Bereich des Hauptdruckpunktes des Passagiers angelenkt ist.

Vorteilhaft weist die Hebeeinrichtung mindestens zwei gelenkig miteinander verbundene Gelenkglieder auf, die einerseits mit dem Sitzteil und andererseits mit dem Traggestell verbunden sind, wobei an einem Verbindungspunkt der Gelenkglieder ein Stellglied angreift. In der normalen Stellung des Sitzteiles sind die beiden Gelenkglieder unter Winkeleinschluß zueinander angeordnet. Hierdurch werden die auftretenden Lasten im wesentlichen verlustfrei auf das Traggestell übertragen, wobei das Stellglied nahezu unbelastet ist. Weiterhin wird das Stellglied bei Beaufschlagung in der richtigen Richtung belastet.

Hierbei kann ein pneumatisches, hydraulisches oder elektrisches Stellglied zum Einsatz kommen.

Nach einer vorteilhaften Ausführungsform ist das Stellglied einerseits an einem vorderen Lagerbock des Traggestells und andererseits am Verbindungspunkt der Gelenkglieder angelenkt.

In weiterer vorteilhafter Ausgestaltung ist im Bereich der Rückenlehne ein abklappbarer Tisch vorgesehen, der an zwei beabstandeten Tragarmen gehalten ist, die schwenkbar an der Schwenkachse des Sitzteils gelagert sind. Hierdurch wird erreicht, daß der Tisch in ausgeklappter Stellung an der Verstellbewegung des Sitzteiles nicht teilnimmt. Weiterhin entsteht keine Relativbewegung zwischen dem Sitzteil und dem Tisch in eingeklappter Stellung.

Vorteilhaft weist mindestens einer der Tragarme des Tisches ein Stützelement auf, das sich in der ausgeklappten Stellung des Tisches an dem Traggestell abstützt.

Hierbei kann das Stützelement einen zapfenförmigen Ansatz aufweisen, der in eine zugeordnete Aussparung an dem Traggestell eingreift.

Vorteilhaft ist das Sitzteil als einteilige Sitzschale aus Kunststoff ausgebildet.

Nachfolgend wird die Erfindung anhand von Ausführungsbeispielen näher erläutert, die in schematischer Weise in der Zeichnung dargestellt sind. Hierbei zeigen:
- Figur 1: eine schematische Seitenansicht eines erfindungsgemäßen Fluggastsitzes;
- Figur 2: eine vergrößerte Darstellung des Ausschnittes II gemäß Figur 1;
- Figur 3: einen Vertikalschnitt durch die Sitzfläche des Fluggastsitzes gemäß Figur 1;
- Figur 4: einen Vertikalschnitt durch die Sitzfläche einer anderen erfindungsgemäßen Ausführungsform;
- Figur 5: eine Draufsicht auf den vorderen Teil der Sitzfläche bei einer anderen erfindungsgemäßen Ausführungsform mit die Shore-Härte reduzierenden Einschnitten;
- Figur 6: einen Vertikalschnitt durch die Sitzfläche einer weiteren erfindungsgemäßen Ausführungsform mit einem gelenkig angeordneten vorderen Bereich der Sitzfläche;
- Figur 7: einen Vertikalschnitt durch die Sitzfläche einer weiteren erfindungsgemäßen Ausführungsform mit einem volumenveränderlichen Polsterelement;
- Figur 8: eine Einzeldarstellung der Hebeeinrichtung des Fluggastsitzes gemäß Figur 1;
- Figur 9: eine Seitenansicht eines erfindungsgemäßen Fluggastsitzes mit einem abklappbaren Tisch;
- Figur 10: eine perspektivische Darstellung einer Sitzreihe mit zwei erfindungsgemäßen Fluggastsitzen, wobei bei einem Fluggastsitz das Sitzteil fehlt;
- Figur 11: einen Vertikalschnitt durch den Tragarm und die Tischfläche des abklappbaren Tisches; und
- Figur 12: eine Rückansicht der Sitzreihe gemäß Figur 10.

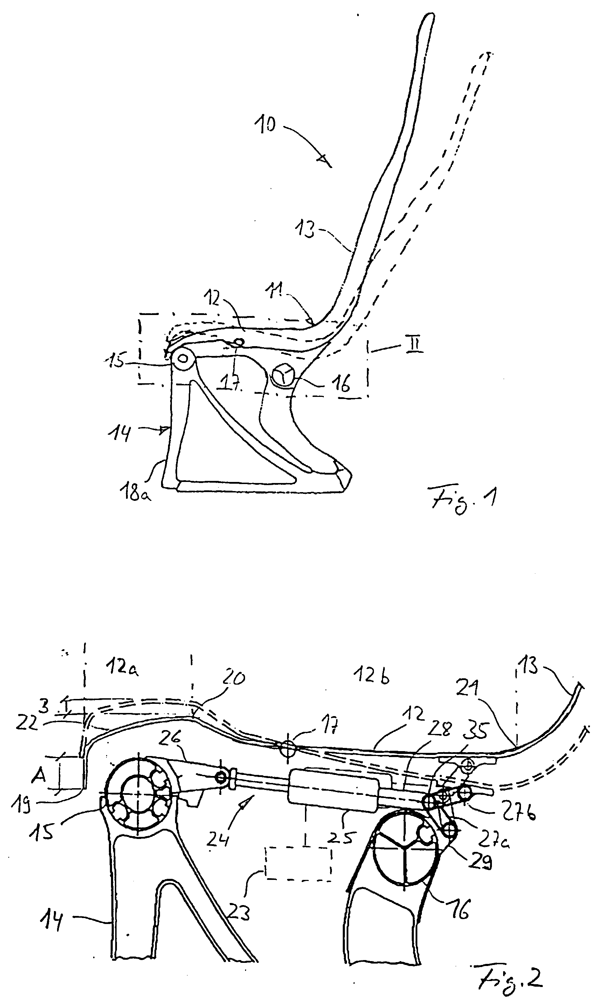

Figur 1 zeigt eine schematische Seitenansicht des Fluggastsitzes 10, der insbesondere bei sogenannten Pendelflugzeugen (Commuter-Flugzeugen) zum Einsatz kommt. Der Fluggastsitz 10 weist ein am Boden des Passagierraumes festgelegtes Traggestell 14 auf, das aus Leichtmetall hergestellt ist. Das Traggestell 14 weist beabstandete Tragrahmen 18a, 18b auf, die jeweils als Leichtmetallgußteil ausgeführt sind. Die beabstandeten Tragrahmen 18a, 18b sind über ein vorderes Querrohr 15 und ein hinteres Querrohr 16 miteinander verbunden. An der Innenseite der Tragrahmen 18a, 18b, ragen jeweils horizontal ausgerichtete Bolzen 39 ab, die eine Schwenkachse 17 für ein Sitzteil 11 bilden.

Das Sitzteil 11 des Fluggastsitzes 10 ist als einteilige Sitzschale aus Kunststoff ausgeführt. Das Sitzteil 11 weist eine Sitzfläche 12 und eine hiermit verbundene Rückenlehne 13 auf. Bei der dargestellten Ausführungsform ist die Rückenlehne 13 fest mit der Sitzfläche 12 verbunden. Es kann jedoch auch eine schwenkbewegliche Anordnung der Rückenlehne bezüglich der Sitzfläche 12 vorgesehen sein.

Das Sitzteil 11 ist bezüglich des Traggestells 14 schwenkbar angeordnet. Die Lagerung des Sitzteiles 11 an dem Traggestell 14 erfolgt über die Schwenkachse 17, die im mittleren Bereich der Sitzfläche 12 angeordnet ist.

Figur 2 zeigt eine vergrößerte Darstellung des Ausschnittes II von Figur 1. Aus dieser Darstellung ist ersichtlich, daß die Schwenkachse 17 im mittleren Bereich der Sitzfläche 12 angeordnet ist. Hierbei befindet sich die Schwenkachse 17 vorteilhaft hinter dem Sitzpunkt des Passagiers damit dessen Körpergewicht die Aufwärtsbewegung des Sitzteiles aus der abgesenkten Stellung unterstützt. Die Schwenkachse 17 ist in einem Bereich von etwa 0,30 bis 0,70 der Tiefe der Sitzfläche 12 angeordnet.

Die Sitzfläche 12 kann in einen vorderen Bereich 12a und in einen hinteren Bereich 12b unterteilt werden. Hierbei erstreckt sich der vordere Bereich 12a von der Vorderkante 19 der Sitzfläche 12 bis zu einem Zenitbereich 20. Der hintere Bereich 12b erstreckt sich von dem Zenitbereich 20 bis zu einer Lehnenwurzel 21.

Im vorderen Bereich 12a weist die Sitzfläche 12 eine nach vorne abfallende Außenkontur 22 auf. Die Außenkontur 22 steigt ausgehend von der Schwenkachse 17 zunächst zu dem Zenitbereich 20 an und fällt dann in Richtung der Vorderkante 19 schräg nach vorne ab.

Die im vorderen Bereich 12a schräg abfallende Außenkontur 22 führt beim Absenken des Sitzteiles 11 in die in Figur 2 strichliniert dargestellte Absenkposition nur zu einer geringen Anhebung der Sitzfläche 12 im vorderen Bereich 12a. Diese Verhältnisse sind besonders deutlich aus Figur 2 ersichtlich. Bei der Absenkung der Sitzfläche 12 in die strichlinierte Absenkposition wird die Vorderkante 19 um die Distanz A angehoben. Demgegenüber erfolgt im Zenitbereich 20 nur eine Anhebung um die wesentlich geringere Distanz B.

Somit führt die schräg nach vorne abfallende Außenkontur im vorderen Bereich 12a nur zu geringen Anhebungen der Sitzfläche 12, wodurch der auf die Oberschenkel des Passagiers ausgeübte Druck nicht wesentlich erhöht wird. Bei der Absenkung des Sitzteiles 11 treten somit keine Beeinträchtigungen des Sitzkomforts auf.

Figur 2 zeigt weiterhin eine Verstelleinrichtung 23 für das Sitzteil 11, die eine Hebeeinrichtung 24 aufweist. Die Hebeeinrichtung 24 besitzt ein Stellglied 25, das bei der in Figur 2 dargestellten Ausführungsform als einseitig pneumatisches Stellglied ausgearbeitet ist. Alternativ kann ein hydraulisches oder elektrisches Stellglied 25 vorgesehen sein.

Das Stellglied 25 ist einerseits an einem Lagerbock 26 festgelegt, der seinerseits an dem vorderen Querrohr 15 befestigt ist. Andererseits ist eine Kolbenstange 28 des Stellgliedes 25 an einem Verbindungspunkt 35 zweier Gelenkglieder 27a, 27b angelenkt. Das Gelenkglied 27a ist gelenkig mit einem Lagerbock 29 verbunden, der an dem hinteren Querrohr 16 festgelegt ist. Das Gelenkglied 27b ist im Bereich des Hauptdruckpunktes an der Unterseite des Sitzteiles 11 angelenkt.

In der Ausgangsposition, die in Figur mit ausgezogenen Linien dargestellt ist, sind die Gelenkglieder 27a, 27b unter Winkeleinschluß angeordnet. Hierdurch wird bei einer Absenkung des Sitzteiles 11 eine Beaufschlagung des Stellgliedes 25 in der richtigen Richtung erreicht. Weiterhin werden die auftretenden Lasten im wesentlichen verlustfrei auf das Traggestell 14 übertragen.

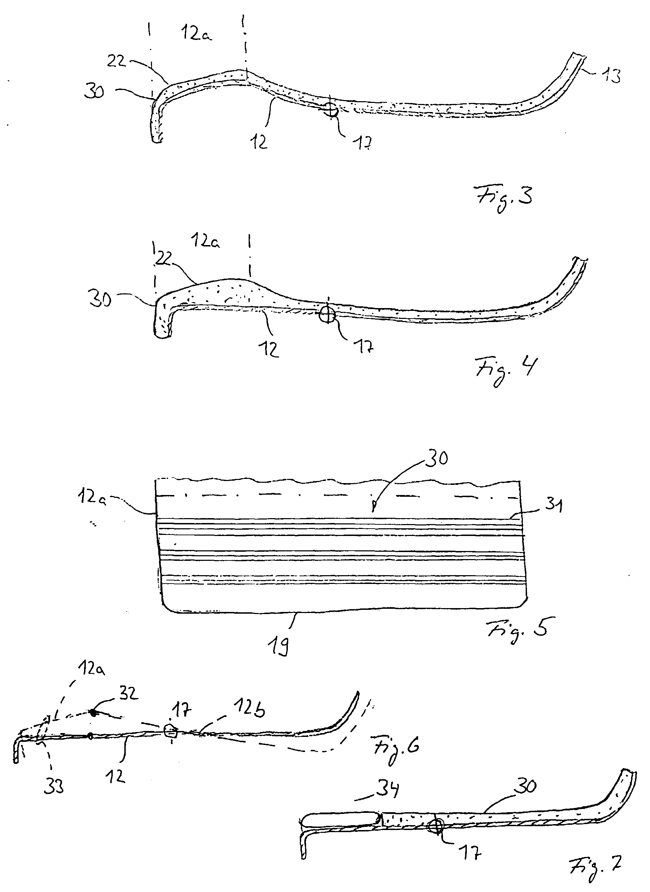

In den Figuren 3 bis 7 sind verschiedene Ausführungsvarianten dargestellt, die bei einer Absenkung des Sitzteiles den Oberschenkeldruck im vorderen Bereich 12a der Sitzfläche 12 verringern.

Figur 3 zeigt eine Ausführungsform, bei der die Außenkontur 22 der Sitzfläche 12 im vorderen Bereich 12a schräg nach vorne abfallend ausgebildet ist. Eine auf der Sitzfläche 12 aufgebrachte Schaumstoffauflage 30 aus PU-Weichschaum weist hierbei eine im wesentlichen konstante Stärke auf.

Bei der in Figur 4 dargestellten Ausführungsvariante wird die schräg nach vorne abfallende Außenkontur 22 durch den Querschnitt der Schaumstoffauflage 30 erreicht. Demgegenüber weist die Sitzfläche 12 einen im wesentlichen linearen Verlauf auf.

Die unerwünschte Erhöhung des Oberschenkeldrucks im vorderen Bereich 12a der Sitzfläche 12 beim Absenken des Sitzteiles 11 kann auch durch Verwendung eines Schaumstoffmateriales mit geringerer Shore-Härte im vorderen Bereich 12a der Schaumstoffauflage 30 verhindert werden.

Bei der in Figur 5 dargestellten Ausführungsform wird im vorderen Bereich 12a eine erhöhte Nachgiebigkeit der Schaumstoffauflage 30 durch quer verlaufende Einschnitte 31 erreicht. Auch hierdurch kann bei einer Absenkung des Sitzteiles 11 ein erhöhter Druck auf knienahe Bereiche der Oberschenkel vermieden werden.

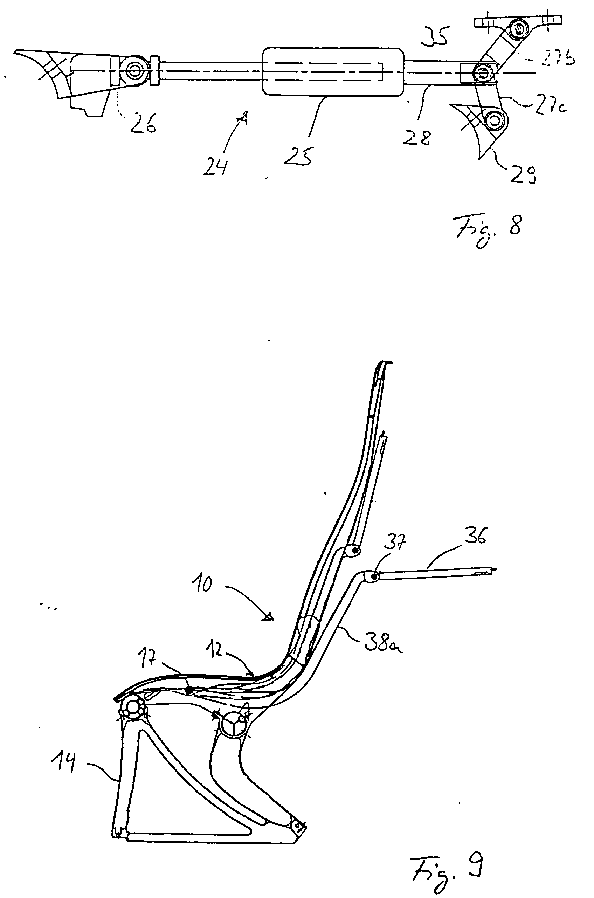

Figur 6 zeigt ein weiteres Ausführungsbeispiel, bei dem der vordere Bereich 12a der Sitzfläche 12 über ein Gelenk 32 mit deren Hauptteil 12b verbunden ist. Das schwenkbeweglich angeordnete Vorderteil 12a ist über ein Kulissenführung 33 geführt. Hierdurch wird beim Absenken des Sitzteiles 11 in die strichliniert dargestellte Absenkposition ein gezieltes Absenken des Vorderteiles 12a erreicht.

Figur 7 zeigt eine weitere Ausführungsvariante in schematischer Seitenansicht, bei der im vorderen Bereich 12a ein Polsterelement 34 vorgesehen ist, dessen Volumen veränderbar ist. Das Volumen des Polsterelements 34 kann durch den Passagier eingestellt werden.

Figur 8 zeigt eine Einzeldarstellung der Hebeeinrichtung 24 von Figur 2. Die Hebeeinrichtung 24 weist ein pneumatisches Stellglied 25 auf, dessen Kolbenstange 28 an dem Verbindungspunkt 35 der Gelenkglieder 27a, 27b angelenkt ist. Figur 8 zeigt die Hebeeinrichtung 24 in der Normalstellung des Sitzteiles 11. Hierbei sind die Gelenkglieder 27a, 27b unter Winkeleinschluß zueinander angeordnet.

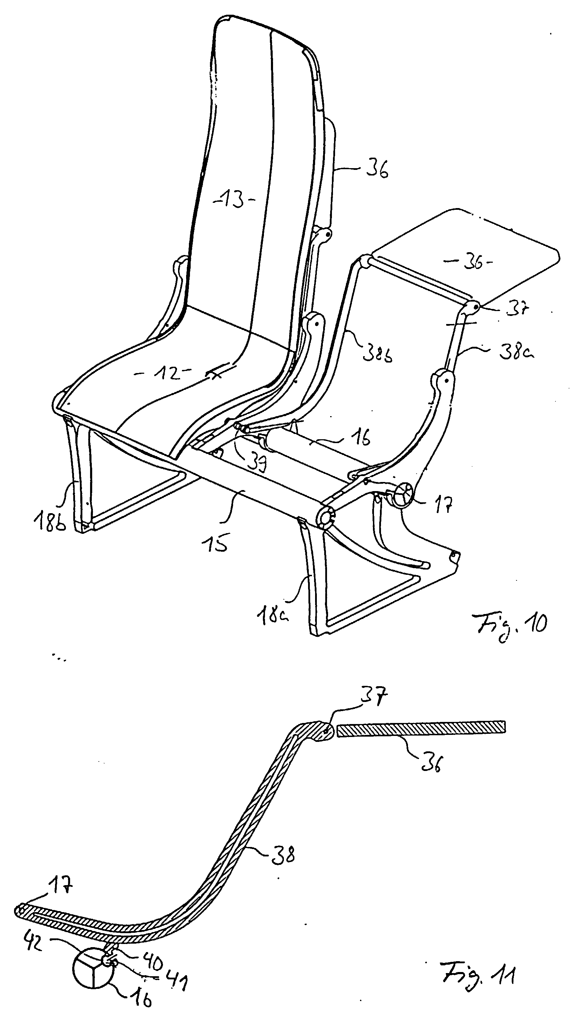

Figur 9 zeigt den Fluggastsitz 10 gemäß Figur 1 mit montiertem Tisch 36. Der Tisch 36, der im Bereich der Rückenlehne abklappbar angeordnet ist, ist endseitig an zwei beabstandeten Tragarmen 38a, 38b gelagert. Hierbei ist ein Gelenk 37 an dem freien Ende der Tragarme 38a, 38b vorgesehen.

Wie besonders deutlich aus Figur 10 hervorgeht, sind die beabstandeten Tragarme 38a, 38b jeweils an Tragbolzen 39 angelenkt, die ebenfalls die Schwenkachse 17 für das Sitzteil 11 bilden. Hierdurch nimmt der Tisch 36 in ausgeklappter Stellung an der Schwenkbewegung des Sitzteiles 11 nicht teil.

In der eingeklappten Stellung schmiegen sich die Tragarme 38a, 38b sowie der Tisch 36 an die Rückenlehne 13 des Sitzteiles 11 an. In dieser Stellung entsteht keine Relativbewegung zwischen dem Sitzteil und dem Tisch 36.

Figur 11 zeigt einen Vertikalschnitt durch den abklappbaren Tisch 36 sowie die Tragarme 38a, 38b. Um in der ausgeklappten Position eine sichere Abstützung des Tisches 36 zu erreichen, sind an den Tragarmen 38a, 38b jeweils ein Stützelement 40 vorgesehen, das einen zapfenförmigen Ansatz 41 aufweist. In der ausgeklappten Position des Tisches 36 greift der Ansatz 41 in eine zugeordnete Aussparung 42 an dem hinteren Querrohr 16 ein.

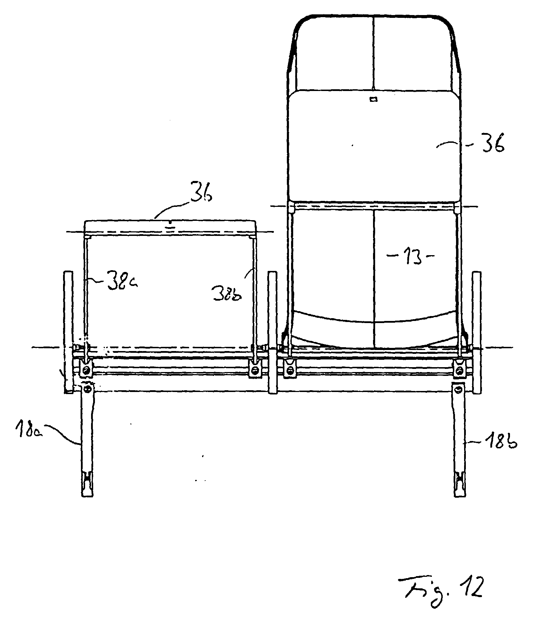

Figur 12 zeigt eine Rückansicht der Sitzreihe gemäß Figur 10. Auch aus dieser Darstellung ist ersichtlich, daß der abklappbare Tisch 36 an Tragarmen 38a, 38b angeordnet ist, die auf der Schwenkachse 17 des Sitzteiles 11 schwenkbar gelagert sind.

Die vorstehend beschriebenen Ausführungsvarianten des Fluggastsitzes 10 zeichnen sich durch einen einfachen Aufbau aus wenigen Teilen aus, woraus eine kostengünstige Herstellung resultiert. Allen Ausführungsformen ist gemeinsam, daß durch die spezielle Ausgestaltung des vorderen Bereiches 12a der Sitzfläche 12 in der abgesenkten Position nur ein geringer Oberschenkeldruck vorliegt. Hierdurch wird ein hoher Sitzkomfort in allen Sitzpositionen gewährleistet.

## Patentansprüche

1. Fluggastsitz mit einem Traggestell (14), das eine Schwenkachse (17) aufweist, an der ein Sitzteil (11), bestehend aus einer Sitzfläche (12) und einer Rückenlehne (13), schwenkbar angeordnet ist, dadurch gekennzeichnet, daß die Schwenkachse (17) in einem mittleren Bereich der Sitzfläche (12) angeordnet ist und daß in einem vorderen Bereich (12a) der Sitzfläche (12) ein Mittel (22, 31, 32, 34) vorgesehen ist, das den Oberschenkeldruck im vorderen Bereich (12a) der Sitzfläche (12) bei der Absenkung des Sitzteiles (11) verringert.

2. Fluggastsitz nach Anspruch 1, dadurch gekennzeichnet, daß die Schwenkachse (17) in der Nähe des Sitzpunktes des Passagiers, vozugsweise hinter dem Sitzpunkt des Passagiers, angeordnet ist.

3. Fluggastsitz nach Anspruch 1 oder 2, dadurch gekennzeichnet, daß die Schwenkachse (17) in einem Bereich von etwa 0,30 bis 0,70 der Tiefe der Sitzfläche (12) angeordnet ist.

4. Fluggastsitz nach einem der Ansprüche 1 bis 3, dadurch gekennzeichnet, daß der Sitz eine Schaumstoffauflage (30), insbesondere aus PU-Weichschaumstoff, aufweist.

5. Fluggastsitz nach einem der Ansprüche 1 bis 4, dadurch gekennzeichnet, daß die Sitzfläche (12) und/oder die Schaumstoffauflage (30) im vorderen Bereich (12a) eine schräg nach vorne abfallende Außenkontur (22) aufweist.

6. Fluggastsitz nach Anspruch 5, dadurch gekennzeichnet, daß die Sitzfläche (12) und/oder die Schaumstoffauflage (30) eine ausgehend von der Schwenkachse (17) zunächst ansteigende und anschließend schräg nach vorne abfallende Außenkontur (22) aufweist.

7. Fluggastsitz nach einem der Ansprüche 1 bis 6, dadurch gekennzeichnet, daß die Schaumstoffauflage (30) im vorderen Bereich (12a) der Sitzfläche (12) eine geringere Shore-Härte als im hinteren Bereich (12b) der Sitzfläche (12) aufweist.

8. Fluggastsitz nach Anspruch 7, dadurch gekennzeichnet, daß im vorderen Bereich (12a) ein Schaumstoffmaterial mit geringerer Shore-Härte vorgesehen ist.

9. Fluggastsitz nach Anspruch 7 oder 8, dadurch gekennzeichnet, daß die Schaumstoffauflage (30) im vorderen Bereich (12a) die Shore-Härte verringernde Einschnitte (31) aufweist.

10. Fluggastsitz nach einem der Ansprüche 1 bis 9, dadurch gekennzeichnet, daß die Sitzfläche (12) ein Vorderteil (12a) aufweist, das über ein Gelenk (32) an dem hinteren Teil (12b) der Sitzfläche (12) angeordnet ist und an einer Kulissenführung (33) geführt ist.

11. Fluggastsitz nach Anspruch 1, dadurch gekennzeichnet, daß im vorderen Bereich der Sitzfläche (12) ein Polsterelement (34) vorgesehen ist, dessen Volumen veränderbar ist.

12. Fluggastsitz nach einem der Ansprüche 1 bis 11, dadurch gekennzeichnet, daß das Sitzteil (11) eine Verstelleinrichtung (23) zur Veränderung der Sitzposition aufweist.

13. Fluggastsitz nach Anspruch 12, dadurch gekennzeichnet, daß die Verstelleinrichtung (23) mindestens eine Hebeeinrichtung (24) aufweist, die einerseits am Traggestell (14) und andererseits am Sitzteil (11), insbesondere im Bereich des Hauptdruckpunktes des Passagiers, angelenkt ist.

14. Fluggastsitz nach Anspruch 13, dadurch gekennzeichnet, daß die Hebeeinrichtung (24) mindestens zwei gelenkig miteinander verbundene Gelenkglieder (27a, 27b) aufweist, die einerseits mit dem Sitzteil (11) und andererseits mit dem Traggestell (14) verbunden sind, wobei an einem Verbindungspunkt (35) der Gelenkglieder (27a, 27b) ein Stellglied (25) angreift.

15. Fluggastsitz nach Anspruch 13 oder 14, dadurch gekennzeichnet, daß ein pneumatisches, hydraulisches oder elektrisches Stellglied (25) vorgesehen ist.

16. Fluggastsitz nach Anspruch 14 oder 15, dadurch gekennzeichnet, daß das Stellglied (25) einerseits an einem vorderen Lagerbock (26) des Traggestells (14) und andererseits am Verbindungspunkt (35) der Gelenkglieder (27a, 27b) angelenkt ist.

17. Fluggastsitz nach einem der Ansprüche 1 bis 16, dadurch gekennzeichnet, daß im Bereich der Rückenlehne (13) ein abklappbarer Tisch (36) vorgesehen ist, der an zwei beabstandeten Tragarmen (38a, 38b) gehalten ist, die schwenkbar an der Schwenkachse (17) des Sitzteiles (11) gelagert sind.

18. Fluggastsitz nach Anspruch 17, dadurch gekennzeichnet, daß mindestens einer der Tragarme (38a, 38b) des Tisches (36) ein Stützelement (40) aufweist, das sich in der ausgeklappten Stellung des Tisches (36) an dem Traggestell (14) abstützt.

19. Fluggastsitz nach Anspruch 18, dadurch gekennzeichnet, daß das Stützelement (40) einen zapfenförmigen Ansatz (41) aufweist, der in eine zugeordnete Aussparung (42) des Traggestells (14) eingreift.

20. Fluggastsitz nach einem der Ansprüche 1 bis 19, dadurch gekennzeichnet, daß das Sitzteil (11) als einteilige Sitzschale aus Kunststoff ausgebildet ist.
